# EUROPÄISCHE PATENTSCHRIFT

(11) **EP 1 691 290 B1**
(45) Veröffentlichungstag und Bekanntmachung des Hinweises auf die Patenterteilung: **10.10.2007**
(21) Anmeldenummer: 05002650.9
(22) Anmeldetag: 09.02.2005
(51) Int. Cl.: G06F 11/14

(54) **Verfahren zur Sicherung einer Datenbank und Vorrichtung zur Durchführung des Verfahrens**
Method for securing the integrity of a data base and apparatus for carrying out said method
Procédé pour assurer l'intégrité d'une base de données et dispositif permettant la mise en oeuvre dudit procédé

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- EP-A- 0 250 847
- EP-A- 0 592 251
- EP-A- 1 387 269
- WO-A-03/009139

## Beschreibung

Die Erfindung betrifft ein Verfahren zur Sicherung einer Datenbank.

Die Erfindung betrifft ferner ein Filialsystem, in dem das Verfahren eingesetzt wird.

Die internationale Offenlegungsschrift WO 02/065329 A1 der Escher Group offenbart ein Speichersystem auf Netzwerkbasis, wobei das Speichersystem mehrere Speicherlaufwerke enthält, und wobei die Speicherlaufwerke gleichberechtigt über das Netzwerk miteinander kommunizieren können, wobei ferner ein Speicherkoordinator eine Speicherung von Dateien auf den Laufwerken steuert, wobei ferner der Speicherkoordinator ausgewählte Gruppen von Laufwerken bestimmt und wobei der Speicherkoordinator eine Gruppe von Laufwerken so koordiniert, dass sie eine ausgewählte Gruppe von Dateien speichern.

Ferner sind im Stand der Technik Raid-Verfahren bekannt, bei denen Daten auf verschiedenen Sicherungsmedien gespeichert werden und wobei für den Fall, dass ein Wiederherstellen der Daten auf Grundlage der gespeicherten Informationen erforderlich ist, Daten verschiedener Sicherungsmedien miteinander kombiniert werden.

Aus dem Dokument EP 0250 847A ist ein Verfahren zur Wiederherstellung von in einem transaktionsbasierten Datenbanksystem gespeicherten Daten unter Verwendung von Serialisierten Transaktionslagdaten.

Um Systeme bereitzustellen, welche möglichst einfach erweiterbar oder veränderbar sind, ist es ferner bekannt, derartige Systeme modular auszubilden. Bei den Modulen handelt es sich um standardisierte Komponenten, welche von mehreren an-deren Komponenten verwendet werden können. Vorzugsweise können neue Komponenten nach dem "Plug&Play"-Prinzip angeschlossen werden, ohne dass das gesamte System angepasst werden muss.

Ferner ist es bekannt, Checkpoints in Datenverarbeitungssystemen einzusetzen. Bekannte Checkpoints sind Datenelemente, welche die Konsistenz von Daten verifizieren.

Es ist wünschenswert, ein Verfahren zur Sicherung einer Datenbank bereitzustellen, bei dem für eine Sicherung der Datenbank ein möglichst geringes Datenvolumen übertragen werden muss.

Ferner ist es wünschenswert, eine möglichst hohe Flexibilität von Datenübertragungen und eine möglichst wirksame und Übertragungsressourcen schonende Übertragung von Daten zu ermöglichen.

Erfindungsgemäß wird ein Verfahren zur Sicherung und/oder Wiederherstellung einer Datenbank nach Anspruch 1 sowie ein Filialsystem nach Anspruch 16 bereitgestellt.

Vorteilhafte Weiterbildungen der Erfindung sind Gegenstand der Ansprüche 2 bis 15.

Ferner wird vorgeschlagen, ein Verfahren zur Sicherung einer Datenbank beziehungsweise eines mehrere Datenbanken umfassenden Datenbanksystems so durchzuführen, dass die Datenbank auf einem ersten Laufwerk installiert wird, dass die Datenbank sowie ein Transaktionsverzeichnis auf ein zweites Laufwerk kopiert werden, dass die Datenbank auf ein Sicherungsmedium kopiert wird, dass ein Datensatz auf dem ersten Laufwerk hinzugefügt wird und ein Transaktionseintrag in das Transaktionsverzeichnis auf das zweite Laufwerk hinzugefügt wird. Außerdem erfolgt ein Kopieren des ergänzten Transaktionsverzeichnisses auf das Sicherungsmedium.

Außerdem ist es zweckmäßig, auf einem ersten Laufwerk eine Datenbank zu installieren und dort Daten zu speichern. Kopien dieser Daten werden auf einem zweiten Laufwerk und einem Sicherungsmedium gespeichert. Ferner wird bei Hinzufügen eines Datensatzes zu der Datenbank auf dem ersten Laufwerk ein Transaktionseintrag in das Transaktionsverzeichnis auf dem zweiten Laufwerk vorgenommen.

Das entsprechend ergänzte Transaktionsverzeichnis wird anschließend auf das Sicherungsmedium kopiert.

Ein Einsatz dieser Verfahrensbestandteile kann grundsätzlich mit beliebigen der in dieser Anmeldung dargestellten Verarbeitungsschritte kombiniert werden.

Insbesondere ist es zweckmäßig, diese Verarbeitungsschritte mit den in den Patentansprüchen enthaltenen Verfahrensschritten zu kombinieren.

Ferner ist auch eine Kombination der Patentansprüche zweckmäßig.

Insbesondere reichen auch einzelne der dargestellten Maßnahmen zur Erhöhung der Wiederherstellungsqualität bei Verfahren zur Sicherung und Wiederherstellung von Datenbanken mit wenigstens einem Vorgangsbearbeitungsmodul. Die Kombination mehrer Merkmale weist jedoch noch weitere Vorteile auf.

Obwohl die Erfindung sich grundsätzlich für eine Sicherung beliebiger Datenbanken eignet, ist es besonders zweckmäßig, sie zur Sicherung von aufwendigen Datenbanksystemen einzusetzen.

Insbesondere eignet sich die Erfindung für einen Einsatz in einem Datenbanksystem, das Daten enthält, die in einem Filialsystem gespeichert und/oder verarbeitet werden.

Ein Filial-System ist insbesondere ein System, bei dem Waren und/oder Dienstleistungen in einer Vielzahl von - vorzugsweise räumlich getrennten - Verkaufsstellen (Filialen) angeboten und/oder bereitgestellt werden.

Der Begriff Filialen ist in keiner Weise einschränkend zu verstehen und umfasst auch Verkaufsautomaten oder sonstige Terminals, welche eine Bereitstellung von Dienstleistungen ermöglichen. Beispiele hierfür sind Fahrkarten, Verkaufsautomaten oder Buchungsterminals.

Die zuvor dargestellten Filialen bilden das Frontend des Filialsystems. Zweckmäßigerweise enthält das Filialsystem auch ein Backend, in dem für die Bearbeitung von Vorgängen relevante Daten gespeichert sind.

Zweckmäßigerweise sind die Filialen des Filial-Frontends mit dem Backend über geeignete Datenverbindungsleitungen verbunden.

Der Begriff "Datenverbindungsleitungen" beinhaltet selbstverständlich sowohl drahtgebundene als auch drahtlose Übertragungswege.

Die Auswahl erfolgt jeweils zweckmäßigerweise unter den zu berücksichtigenden Übertragungsraten und/oder sonstigen Übertragungsbedingungen.

Auch die übrigen Mittel zur Ausstattung des Filialsystems zur Durchführung des Verfahrens können an die jeweiligen Bedürfnisse angepasst werden.

Insbesondere sind die dargestellten technischen und/oder fachlichen Checkpoints, der Context-Manager und der Recovery-Manager Beispiele für besonders bevorzugte Mittel zum Einsatz der Erfindung in dem Filialsystem.

Es ist dabei jedoch nicht erforderlich, sämtliche dieser Mittel einzusetzen, da auch ein einzelnes dieser Mittel bereits zu einer Erhöhung der Datensicherheit und/oder Bearbeitungsgeschwindigkeit beiträgt.

Eine Kombination mehrerer dieser oder der anderen in dem Anmeldetext erwähnten Mittel ist jedoch besonders vorteilhaft.

Es ist besonders vorteilhaft, dass das Vorgangsbearbeitungsmodul dadurch gesichert und/oder wiederhergestellt wird, dass für die Ausführung des Vorgangsbearbeitungsmoduls erforderliche Daten in einem Datenobjekt abgelegt werden und dass ein Context-Manager eine Serialisierungskomponente aufruft, dass auf Grundlage der in dem Datenobjekt abgelegten Daten ein Datenstrom (Stream) erzeugt wird, dass der Recovery-Manager den Datenstrom zusammen mit einem die in dem Datenobjekt abgelegten Daten verifizierenden fachlichen Checkpoint in einem Sicherungsmedium speichert und dass anhand der mit dem Datenstrom mitgespeicherten fachlichen Checkpoints der Datenstrom aus dem Sicherungsmedium ausgelesen wird.

Die Erfindung sieht somit vor, dass das Vorgangsbearbeitungsmodul dadurch gesichert und wiederhergestellt wird, dass für die Ausführung des Vorgangsbearbeitungsmoduls erforderliche Daten in einem Datenobjekt abgelegt werden und dass ein Context-Manager eine Serialisierungskomponente aufruft, dass ein Datenstrom (Stream) erzeugt wird und dass der Recovery-Manager den Datenstrom in einem Sicherungsmedium speichern und dass anhand eines mit dem Datenstrom mitgespeicherten fachlichen Checkpoints der Datenstrom aus dem Sicherungsmedium ausgelesen wird.

Hierbei ist es besonders zweckmäßig, dass das Sicherungsmedium als eine transaktionssichere Datenquelle für eine Wiederherstellung der Daten in einem Wiederherstellungsfall wirkt.

Zur Verringerung des einzusetzenden Bedarfs an Speichermedien ist es zweckmäßig, dass nach dem Kopieren des ergänzten Transaktionsverzeichnisses auf das Sicherungsmedium der Transaktionseintrag auf dem zweiten Laufwerk gelöscht wird.

Es ist besonders vorteilhaft, dass der aktuelle Status eines Clients in Form von technischen und/oder fachlichen Checkpoints gespeichert wird.

Eine besonders bevorzugte Ausführungsform der Erfindung betrifft ein Datenverarbeitungssystem, das sowohl fachliche als auch technische Checkpoints enthält.

Durch den Einsatz von zwei verschiedenen Arten von Checkpoints ist es möglich, die Datensicherheit und die Geschwindigkeit der Datenwiederherstellung wesentlich zu erhöhen.

Vorzugsweise sind die erfindungsgemäßen Checkpoints in Übereinstimmung mit den bekannten Checkpoints Datenelemente, welche die Konsistenz von Daten verifizieren

Die technischen Checkpoints sichern vorzugsweise den Inhalt eines Daten-Stacks auf einem Context-Manager-Backup.

Insbesondere ist es zweckmäßig, die technischen Checkpoints zur Sicherung des Inhalts von Vorgangsbearbeitungsmodulen einzusetzen. In einer besonders bevorzugten Ausführungsform der Erfindung enthalten die technischen Checkpoints Informationen über eine Reihenfolge der Speicherung von Dateninhalten der Vorgangsbearbeitungsmodule in dem Daten-Stack, insbesondere Informationen über den Inhalt des Vorgangsbearbeitungsmoduls.

Die technischen Checkpoints enthalten ferner Informationen darüber, welches Vorgangsbearbeitungsmodul in dem obersten Stack gespeichert ist.

Vorzugsweise werden die technischen Checkpoints bei Erzeugung neuer Checkpoints durch die neuen Checkpoints überschrieben.

Eine besonders bevorzugte Ausführungsform der Erfindung sieht vor, dass nur eine Generation von technischen Checkpoints vorliegt.

Die fachlichen Checkpoints beinhalten Informationen über die zu sichernden Daten.

Es ist besonders vorteilhaft, dass die fachlichen Checkpoints auch bei Erzeugung neuer Checkpoints nicht überschrieben werden.

Ferner ist es zweckmäßig, die fachlichen Checkpoints mit einem Verfallsdatum zu versehen und solange in dem Datenverarbeitungssystem und/oder in dem Speichermedium zu speichern, bis das Verfallsdatum erreicht ist.

Eine besonders bevorzugte Ausführungsform der Erfindung sieht fachliche Checkpoints vor, die sowohl Dateninhalte von technischen Checkpoints als auch Verfallsdaten enthalten.

Ein Beispiel eines derartigen fachlichen Checkpoints ist ein Checkpoint, der alle technisch gesicherten Informationen zu einem Bearbeitungsvorgang (Inhalt eines Vorgangsbearbeitungsmoduls) enthält, jedoch mit einer zusätzlichen Information zur Sicherung des Verfallsdatums versehen ist.

Beispielsweise bedeutet dies, dass bei der Bearbeitung von Bearbeitungsvorgängen für einen Kunden in einem Filialsystem die durchgeführten Transaktionen des Kunden in einem virtuellen Warenkorb gespeichert werden und dieser virtuelle Warenkorb mit einem Verfallsdatum verknüpft wird, sodass sichergestellt ist, dass auch nach einer Unterbrechung der Bearbeitung des Vorgangs in dem Vorgangsbearbeitungsmodul ein Wiederaufsetzen des Vorgangs unter Einbeziehung der in dem virtuellen Warenkorb gespeicherten Transaktionsinformationen möglich ist.

Eine besonders bevorzugte Ausführungsform der Erfindung sieht vor, dass zur Sicherung und/oder Wiederherstellung eines Vorgangsbearbeitungsmoduls alle Daten,-die für eine Ausführung von Funktionen des Vorgangsbearbeitungsmoduls von Bedeutung sind oder die zu Nachweisbarkeitszwecken gespeichert werden sollen, in einem Datenobjekt abgelegt werden, dass ferner die Datenobjekte auf einem weiteren Laufwerk/auf einem Sicherungsmedium gespeichert werden und dass bei einem Wiederaufsatz auf einem bestimmten Checkpoint die Werte innerhalb der Datenobjekte wiederhergestellt werden.

Als erfindungsgemäß einsetzbare Laufwerke kann der Fachmann alle Speichermedien einsetzen, die ein möglichst kontinuierliches und/oder zeitnahes Speichern und/oder Auslesen von Daten ermöglichen. Neben Festplatten, Magnetspeicherplatten, CD-ROMs, DVD-ROMs, holographischen Speichermedien wie Tesa-ROMs kommen grundsätzlich auch beliebige andere zur Datenspeicherung geeignete Einheiten in Betracht, beispielsweise Halbleiterspeicher.

Für das Sicherungsmedium werden vorzugsweise Speichermedien eingesetzt, die eine möglichst dauerhafte Speicherung von Daten ermöglichen. Hierfür eignen sich grundsätzlich ähnliche Speichermedien, wie sie auch bei den Laufwerken zum Einsatz kommen. Insbesondere ist es zweckmäßig, auch hierbei Festplatten, Magnetspeicherplatten, CD-ROMs, DVD-ROMs, holographische Speichermedien, wie Tesa-ROMs, einzusetzen.

Ferner ist es zweckmäßig, dass ein Speichern von Daten so erfolgt, dass Zustand und Inhalt eines Datencontainers in einen binären Datenstrom umgewandelt werden.

Eine derartige Umwandlung des Zustands und Inhalts eines Datencontainers in einen binären Datenstrom wird auch als eine Serialisierung bezeichnet.

Obwohl Serialisierungen von Daten grundsätzlich bekannt sind, zeichnen sich besonders bevorzugte Ausführungsformen der Erfindung dadurch aus, dass die Serialisierung und andere Bestandteile des Verfahrens zum Sichern und Wiederherstellen der Daten, insbesondere der Einsatz von Checkpoints, zusammen wirken.

Hierdurch werden die Sicherheit und die Wiederholungsgeschwindigkeit weiter erhöht.

Außerdem wird so sichergestellt, dass die Daten eines Vorgangsbearbeitungsmoduls, die in einem Datenobjekt und damit in dem Datencontainer vorhanden sind, im Falle eines Systemabsturzes und/oder im Falle einer sonstigen Unterbrechung des Bearbeitungsvorganges wiederhergestellt werden.

Eine besonders bevorzugte Ausführungsform der Erfindung zeichnet sich dadurch aus, dass in dem Vorgangsbearbeitungsmodul ein Datencontainer zum Speichern des Datenobjekts erzeugt wird.

Insbesondere ist es zweckmäßig, dass die Datenobjekte den Wert der Daten enthalten.

Vorteilhaft weist das Vorgangsbearbeitungsmodul neben einer oder mehreren Komponenten zur Erfassung und/oder Bearbeitung einen Datencontainer zum Speichern von Datenobjekten auf, die insbesondere den Wert der Daten enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Eine besonders umfassende Datensicherung sowie eine besonders einfache und zuverlässige Datenwiederherstellung lassen sich in einer besonders bevorzugten Ausführungsform der Erfindung dadurch erzielen, dass jedem Datenelement, das von dem Vorgangsbearbeitungsmodul erfasst und/oder verarbeitet wird, ein Datenobjekt zugeordnet wird.

Ferner ist es besonders zweckmäßig, dass der Datencontainer den gesamten Zustand eines Vorgangs enthält.

Vorzugsweise kann dabei jedem Datenelement, das von dem Vorgangsbearbeitungsmodul erfasst und/oder verarbeitet wird, ein Datenobjekt zugeordnet werden. Der Datencontainer enthält damit den gesamten "Zustand" eines Vorgangs. Der vollständige Vorgang kann somit besonders einfach gesichert und gegebenenfalls wiederhergestellt werden. Zur weiteren Erhöhung der Datensicherheit ist es zweckmäßig, dass die Datenobjekte neben den Daten zudem Eigenschaften der Daten enthalten.

Neben den Werten der Daten können die Datenobjekte zudem Eigenschaften der Daten enthalten, welche vorzugsweise Beschränkungen zugelassener Werte beschreiben. Dabei kann es sich bei Daten in einem Zahlenformat beispielsweise um Wertebereiche oder vorgegebene diskrete Zahlenwerte handeln, oder es kann eine vorgegebene Minimal und/oder Maximallänge einer Zeichenkette angegeben werden.

Die Ausführungen für Daten gelten auch für einzelne Datenelemente. Die Verwendung der Pluralform "Daten" stellt keine Festlegung dar, sondern schließt jeweils ausdrücklich auch den Fall ein, dass es sich um ein einzelnes Datenelement handelt.

Das Vorgangsbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann auch das Verhalten des Vorgangs vorgegeben werden. Die Konfiguration des Verhaltens ist somit weitgehend von Einstellungen in der Funktionseinheit des Vorgangsbearbeitungsmoduls entkoppelt, so dass die Funktionseinheit in hohem Maße auf Standardoperationen zurückgreifen kann, die für eine Vielzahl von Vorgängen durchgeführt werden.

Die Erfassung von Daten lässt sich innerhalb des Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

Es ist besonders vorteilhaft, dass das Verfahren in einem Netzwerk erfolgt, das mehrere Vorgangsbearbeitungsmodule enthält, wobei die Vorgangsbearbeitungsmodule mit einem Context-Manager verbindbar sind, wobei der Context-Manager so ausgebildet ist, dass er mit mindestens einem Vorgangsbearbeitungsmodule sowie mit mehreren Dienstkomponenten verbunden ist.

Eine besonders bevorzugte Ausführungsform der Erfindung zeichnet sich dadurch aus, dass der Context-Manager sowohl als zentrales Steuerungsmittel für die Vorgangsbearbeitungsmodule als auch als zentraler Dienstanbieter für die Vorgangsbearbeitungsmodule ausgebildet ist.

Außerdem ist es vorteilhaft, dass der Context-Manager Schnittstellen bereithält, die eine Datenübertragung zwischen dem Session-Manager und einer Rohdatenkomponente ermöglichen.

Die Rohdatenkomponente dient zur Erzeugung von Rohdatensätzen. Der Context-Manager dient vorzugsweise als Mittler. Er gibt die Dienste und/oder Daten der Rohdatenkomponente über eine Schnittstelle an wenigstens ein Vorgangsbearbeitungsmodul weiter.

Ferner ist es zweckmäßig, dass der Context-Manager mit einer Schnittstelle ISupportService verbunden ist, und dass die Schnittstelle so ausgebildet ist, dass sie eine Abfrage des Vorhandenseins von angebundenen Dienstkomponenten ermöglicht.

Eine besonders bevorzugte Ausführungsform der Erfindung zeichnet sich dadurch aus, dass eine Datenübermittlung durch eine Benachrichtigungskomponente (KISS) erfolgt.

Hierbei ist es besonders vorteilhaft, dass die Benachrichtigungskomponente ein Auswahlmodul zur Auswahl von Übertragungswegen zum Übermitteln der Benachrichtigungen enthält.

Es ist besonders zweckmäßig, das Verfahren so durchzuführen, dass ein Ablaufplan des Vorgangsbearbeitungsmoduls in einer Konfigurationsdatei hinterlegt wird, welche beim Start eines Vorgangsbearbeitungsmoduls eingelesen wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt
- Fig. 1: eine besonders bevorzugte Ausführungsform eines erfindungsgemäßen Datensicherungssystems;
- Fig. 2: eine schematische Darstellung eines besonders bevorzugten Ausführungsbeispiels des erfindungsgemäßen Datensicherungssystems;
- Fig. 3: eine schematische Darstellung der Steuerung von Speicherfunktionen unter Steuerung eines Recovery-Managers;
- Fig. 4: eine schematische Darstellung der Steuerung eines Wiederherstellens für die Daten durch den Recovery-Manager;
- Fig. 5: ein Sequenzdiagramm zur Darstellung von Clients und
- Fig. 6: ein Blockdiagramm zur Verdeutlichung der bei Starten eines Clients eingesetzten Komponenten.

In den Abbildungen wird der Einsatz der Erfindung bei der Speicherung eines aufwändigen Datenbanksystems dargestellt, das mehrere Vorgangsbearbeitungsmodule aufweist, die jeweils - vorzugsweise unabhängig voneinander - Daten enthalten, die gespeichert werden sollen.

Der Einsatz der Erfindung ist bei einem derart komplexen System besonders vorteilhaft, da auch bei komplizierten Vorgängen und dem möglichen Teilausfall einzelner Bestandteile des Gesamtsystems eine schnelle Wiederherstellung aller Vorgänge des Bearbeitungssystems möglich ist.

Es ist jedoch gleichfalls möglich, die dargestellten Ausführungsbeispiele für einen Einsatz bei einem weniger aufwändigen System anzupassen.

Das nachfolgend dargestellte System ist vorzugsweise als ein Retailsystem ausgebildet.

Um neue Vorgänge in bestehende Retailsysteme integrieren zu können, so dass diese mit einem Anwendungsprogramm durchführbar sind, müssen neue Komponenten in das bestehende System integriert werden. Bei Retailsystemen im Bereich des Versicherungs-, Finanz- und Logistikwesens müssen beispielsweise neue Vorgänge wie die Eröffnung eines Bankkontos, der Abschluss eines Versicherungsvertrages, der Verkauf eines Tickets oder die Einlieferung eines Versandpaketes abgebildet werden.

Die Zuordnung eines Ablaufplanes zu einem Vorgangsbearbeitungsmodul erfolgt dabei vorzugsweise über die Zuordnung einer spezifischen Konfigurationsdatei, welche beim Start eines Vorgangsbearbeitungsmoduls eingelesen wird.

Das Anwendungsprogramm wird auf dem Computermittel gestartet, wobei die Identifikation ID des damit verbundenen Speichermittels eingelesen wird. Dies erfolgt beispielsweise über das Auslesen eines Arbeitsplatztyps aus einem Datenbankeintrag des Computermittels. Nach Einlesen der ID erfolgt ein Vergleich der Identifikation ID des Speichermittels mit den Identifikationen ID1 und ID2 der vorhandenen Vorgangsbearbeitungsmodule und eine Ermittlung des Vorgangsbearbeitungsmoduls mit einem zugeordneten Speichermittel mit der Identifikation ID. Stimmt die Identifikation eines Vorgangsbearbeitungsmoduls mit der eingelesenen ID überein, wird das betreffende Vorgangsbearbeitungsmodul bzw. die Vorgangsbearbeitungsmodule als aktivierbare Vorgangsbearbeitungsmodule des Anwendungsprogrammes festgelegt. Beim Start eines der Vorgangsbearbeitungsmodule wird der jeweilige Ablaufplan eingelesen und die zugeordneten Maskenarbeitsbereiche auf der graphischen Benutzeroberfläche dargestellt.

Ein Vorgangsbearbeitungsmodul wird vorzugsweise durch ein Startmodul des Gesamtsystems gestartet, wobei beim Starten wenigstens ein Controller, eine Funktionseinheit und ein Datencontainer des Vorgangsbearbeitungsmoduls initialisiert werden. Ferner wird eine Controller-Konfigurationsdatei zur Initialisierung des Controllers eingelesen, wobei die Controller-Konfigurationsdatei die Konfiguration der Darstellung des Ablaufplanes des betreffenden Vorgangsbearbeitungsmoduls beinhaltet. Darüber hinaus wird eine Datencontainer-Konfigurationsdatei zur Initialisierung des Datencontainers eingelesen, wobei die Datencontainer-Konfigurationsdatei die Konfiguration der Datenobjekte des Datencontainers des betreffenden Vorgangsbearbeitungsmoduls und die Konfiguration der Operationen für die Kommunikation zwischen dem Maskenarbeitsbereich, der Funktionseinheit und dem Datencontainer beinhaltet. Die Controller-Konfigurationsdatei und/oder die Datencontainer-Konfigurationsdatei werden vorzugsweise im XML-Format bereitgestellt.

Nachfolgend wird eine besonders bevorzugte Ausführungsform des Starts eines erfindungsgemäßen Systems dargestellt. Zunächst wird am ApplicationManager die Methode Start() aufgerufen. In dieser Methode wird die Initialisierung der Services durchgeführt, d.h. es werden die Komponenten erstellt, die über das Service-Pattern den Vorgangsarten als Dienste zur Verfügung gestellt werden. Dazu wird der zentrale ServiceHandler angelegt und die Services eingetragen, die immer vorhanden sind, wie z.B. IInformation oder IQuicklaunch. Zusätzlich werden dort auch die Services eingetragen und angelegt, die in der Anwendungskonfigurationsdatei angegeben wurden.

Wurden alle Services angelegt und eingetragen, werden der Errorhandler und das Feedback-Control initialisiert.
In der abschließend aufgerufenen Methode StartupCheck() werden zunächst alte Checkpoints, d.h. Checkpoints, deren Gültigkeitsdauer abgelaufen ist, gelöscht. Dann wird geprüft, ob noch ein gültiger Checkpoint vorhanden ist und dieser ggf. geladen. Eine Prüfung des Inventory bildet den nächsten Schritt. Werden hier Inkonsistenzen festgestellt, wird dieses im FeedbackControl angezeigt. Die letzten Tätigkeiten während des Startups sind das Anlegen und Starten des Context-Managers, dem die Informationen zu einem evtl. vorliegenden Recovery-Fall übergeben werden und das Anzeigen der ersten Vorgangsart, die in der Anwendungskonfigurationsdatei festgelegt wurde.

Durch den Controller wird eine Datenkomponente initialisiert und der erste Maskenarbeitsbereich des Vorgangsbearbeitungsmoduls ermittelt und initialisiert. Die Steuerelemente des Maskenarbeitsbereiches werden auf der graphischen Benutzeroberfläche dargestellt, wobei der Maskenarbeitsbereich über die Datenkomponente auf die Datenobjekte des Datencontainers zugreift.

Bei der Festlegung des Vorgangsbearbeitungsmoduls mit einem zugeordneten Speichermittel mit der Identifikation ID als aktivierbares Vorgangsbearbeitungsmodul des Anwendungsprogrammes kann ein Steuerelement für das betreffende Vorgangsbearbeitungsmodul auf der graphischen Benutzeroberfläche angezeigt werden und der Start des Vorgangsbearbeitungsmoduls wird durch eine Betätigung des Steuerelementes durch einen Benutzer ausgelöst.

Die Erfindung umfasst ferner eine Vorrichtung mit Mitteln zur Durchführung des beschriebenen Verfahrens zum rechnergestützten Erzeugen einer graphischen Benutzeroberfläche.

Die Erfindung umfasst ferner ein computerlesbares Medium, das Befehle zum Ausführen der Schritte des erfindungsgemäßen Verfahrens auf einem Computermittel aufweist.

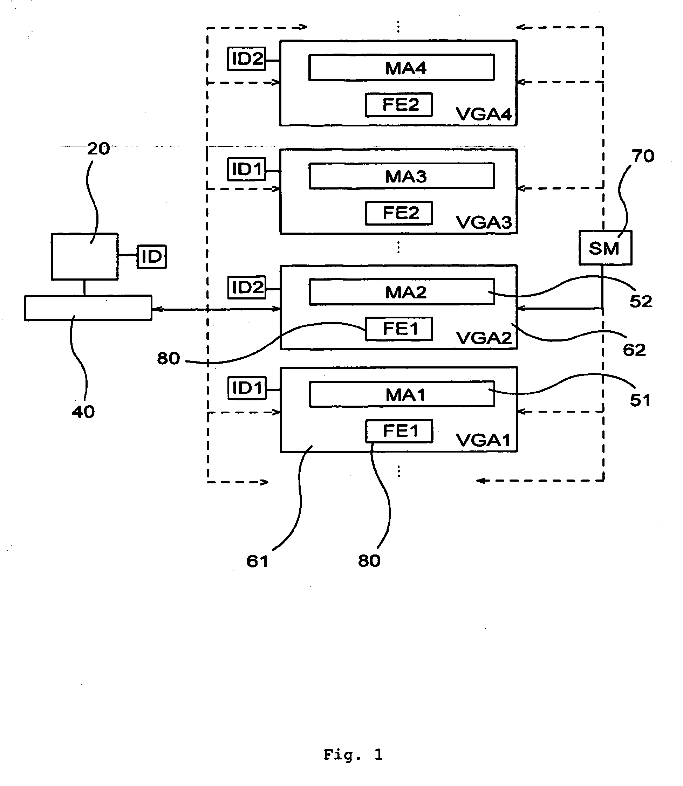

Anhand von Fig. 1 wird die vorteilhafte Verwendung von Vorgangsbearbeitungsmodulen in einem Gesamtsystem aus mehreren Komponenten beschrieben. In Fig. 1 ist dazu schematisch ein besonders bevorzugtes Ausführungsbeispiel eines Vorgangsbearbeitungsmoduls 60 mit einem Ablaufplan 50 aus mehreren Maskenarbeitsbereichen 53 dargestellt. Das Vorgangsbearbeitungsmodul bildet elektronisch einen Vorgang oder Geschäftsprozess ab, welcher von dem Vorgangsbearbeitungsmodul abgewickelt wird.

Bei den Vorgängen handelt es sich beispielsweise um Transaktionen innerhalb eines Retailsystems, welche im Bereich des Finanz-, Versicherungs- und Logistikwesens eingesetzt werden. Unter Transaktionen können neben Vorgängen mit einem eindeutigen Anfang und einem eindeutigen Ende, die entweder vollständig oder gar nicht ausgeführt werden, auch statusunabhängige Abfragen verstanden werden. Das Vorgangsbearbeitungsmodul dient insbesondere zur Sammlung aller erforderlichen Daten für einen Vorgang.

Das Vorgangsbearbeitungsmodul 60 ist auf einem Computermittel 40 installiert. Das Vorgangsbearbeitungsmodul wird im Folgenden auch mit VGA bezeichnet.

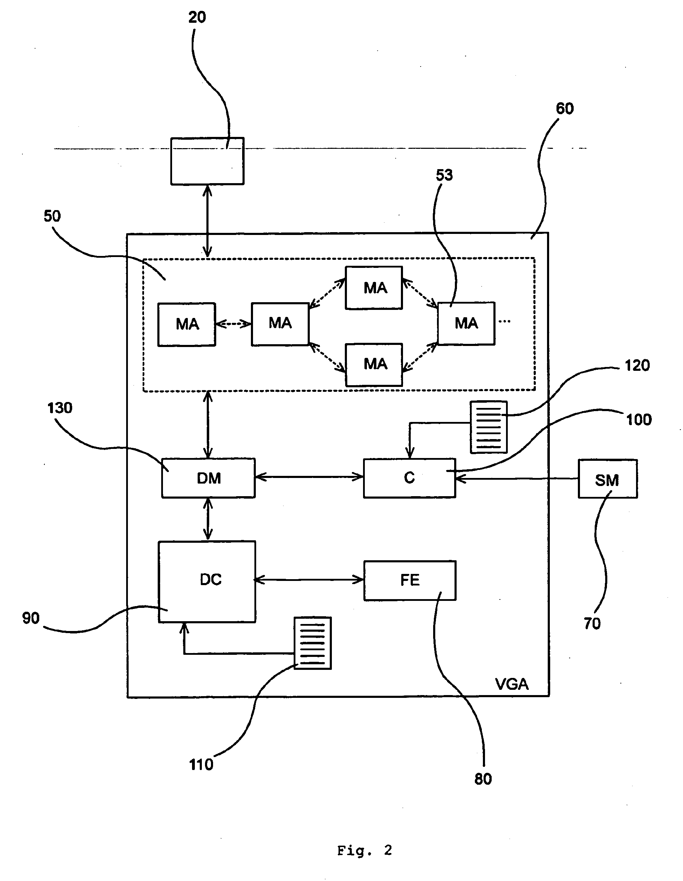

Auf dem Computermittel sind vorzugsweise mehrere Vorgangsbearbeitungsmodule installiert. Dies ist schematisch in Fig. 2 dargestellt, in welcher vier von mehreren Vorgangsbearbeitungsmodulen mit VGA1, VGA2, VGA3 und VGA4 bezeichnet sind. Die Vorgangsbearbeitungsmodule können sich dabei im Frontend oder im Backend eines Gesamtsystems aus mehreren Komponenten befinden. Vorzugsweise ist das VGA im Frontend angeordnet. Bei einem durch das Modul abgebildeten Vorgang handelt es sich beispielsweise um eine Transaktion, die von einem Benutzer 30 an einer graphischen Benutzeroberfläche in Verbindung mit dem jeweiligen Vorgangsbearbeitungsmodul abgewickelt wird. Der Benutzer kann beispielsweise ein Mitarbeiter in einer Filiale sein, welcher den Vorgang für einen Kunden durchführt. Der Benutzer kann ferner der Kunde selbst sein, welcher an einem Automaten eine Transaktion tätigt.

Vorzugsweise handelt es sich bei dem Gesamtsystem, in welches die Vorgangsbearbeitungsmodule integriert sind, um ein stark modulares System, in welchem die Vorgänge bis auf kleinste Funktionseinheiten unterteilt sind. Daher kann ein Vorgangsbearbeitungsmodul auch einen Prozess abbilden, welcher Bestandteil mehrerer anderer Vorgangsbearbeitungsmodule ist. Beispielsweise kann ein VGA das Einscannen eines Barcodes, die Erfassung von Kundendaten oder die Berechnung eines Wertes abbilden. Diese Einzelprozesse können als Module von anderen Vorgangsbearbeitungsmodulen aufgerufen werden, so dass sie nur einmalig implementiert werden müssen. Für jedes Vorgangsbearbeitungsmodul und damit für jeden Vorgang wird eine Benutzeroberfläche bereitgestellt, wobei der modulare Aufbau den Vorteil hat, dass bei einer Veränderung des jeweiligen Einzelprozesses die Benutzeroberfläche ebenfalls nur einmalig in dem betreffenden Vorgangsbearbeitungsmodul verändert werden muss.

Das Vorgangsbearbeitungsmodul 60 steht über das verwendete Computermittel und ein Speichermittel 20 in Verbindung mit Datenverarbeitungseinheiten, die Daten und/oder Steuerelemente enthalten. Bei den Steuerelementen handelt es sich vorzugsweise um Elemente, die eine Prozesssteuerung beeinflussen können. Der Client initialisiert beim Start den Anwendungsrahmen eines Benutzerprogramms. Der Client kann dabei eine Plattform mit weiteren Komponenten eines Frameworks wie Datenbanken, Abrechnungsmodule, etc. nutzen. In einem besonders bevorzugten Ausführungsbeispiel der Erfindung kann eine als CARBON(Component ARchitecture for Business OptimizatioN)-Plattform bezeichnete Plattform genutzt werden, welche als Software realisiert und auf Datenverarbeitungsanlagen installiert ist. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder -einen Recovery-Fall handelt, welcher durch einen Abbruch eines Vorganges erzeugt wurde.

Das Vorgangsbearbeitungsmodul 60 befindet sich vorzugsweise ebenfalls auf dem Client. Dabei können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich vorzugsweise um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul 70 zum Starten der Vorgangsbearbeitungsmodule bereit. Ferner unterstützt das Framework die Vorgangsbearbeitungsmodule bei der Datenhaltung und Ablaufsteuerung und stellt Komponenten für den Zugriff auf Daten oder zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programmes vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen, und die Kapselung trennt die Implementierung von der Schnittstelle.

In einem besonders bevorzugten Ausführungsbeispiel der Erfindung ist das Vorgangsbearbeitungsmodul 60 kein eigenständiges Programm, sondern benötigt zu seiner Ausführung die Infrastruktur eines Clients. Es handelt sich jedoch um eine aktive Komponente, welche beispielsweise das eigene Pausieren und/der den Start anderer Vorgangsbearbeitungsmodule bewirken kann.

Das Vorgangsbearbeitungsmodul 60 weist verschiedene Komponenten auf, welche vorzugsweise unabhängig oder abhängig von der Benutzeroberfläche ausgeführt sind. Die Steuerung der Benutzeroberfläche ist dabei vorzugsweise unabhängig von Einheiten ausgeführt, welche die fachliche Funktionalität des Vorgangs abbilden und steuern. Ferner können einzelne Bereiche im Frontend auf dem Client angeordnet sein, während sich andere Bereiche im Backend, das heißt auf einer zentralen Serverapplikation oder in einem Umsystem befinden können. Umsysteme sind hier die Bezeichnung für Systeme außerhalb eines Filialsystems.

Zu dem Vorgangsbearbeitungsmodul 60 gehört eine Funktionseinheit 80. Die Funktionseinheit 80 liegt in einem besonders bevorzugten Ausführungsbeispiel der Erfindung als gekapseltes *Business-Objekt* BO vor. Ein Vorgangsbearbeitungsmodul ist dabei genau einem logischen *Business-Objekt* BO zugeordnet, das wiederum aus mehreren Klassen mit Verweisen auf Komponenten bestehen kann. Die Aufgabe der Funktionseinheit 80 liegt in der Bereitstellung der fachlichen Funktionalität zur Durchführung eines Vorganges.

Vorzugsweise werden nicht alle Operationen eines Vorgangsbearbeitungsmoduls in einer Klasse implementiert. Im Sinne einer objektorientierten Kapselung verschiedener Aktionen in Klassen hat es sich als vorteilhaft erwiesen, jede Operation in einer eigenen Klasse zu implementieren. Als Ausnahme können jedoch logisch gleiche Aktionen angesehen werden. Beispielsweise kann der Anwender beim Drücken eines "Weiter"- und des "Cancel"-Buttons gefragt werden, ob diese Aktion wirklich durchgeführt werden soll. In diesem Fall handelt es sich tatsächlich um eine gleiche Aktion, die in einer gemeinsamen Klasse, jedoch mit unterschiedlichen Operationsnamen zum Einsatz kommt.

Das VGA weist ferner einen Datencontainer 90 auf. Der Datencontainer 90 ist vorzugsweise ebenfalls unabhängig von der Benutzeroberfläche ausgebildet. Der Datencontainer ist vorzugsweise nach dem Siting-Prinzip einer Container-Site Architektur ausgebildet, wodurch eine einfache Entwicklung ermöglicht wird und Weiterentwicklungen unterstützt werden. Der Datencontainer bildet dabei eine abstrakte generische Schnittstelle von dem Vorgangsbearbeitungsmodul 60 zu Kernkomponenten des Frameworks. Das Framework kommuniziert vorzugsweise über ein Interface *IVGAEntrypoint* mit dem Datencontainer.

Der Datencontainer 90 ist die zentrale Sammelstelle von Daten innerhalb eines Vorgangsbearbeitungsmoduls 60 und ist somit für die Speicherung des Zustandes des Vorgangsbearbeitungsmoduls zuständig. Alle relevanten Daten, die in dem Vorgangsbearbeitungsmodul anfallen, werden im Datencontainer abgelegt. Dabei kann es sich um von einem Benutzer eingegebene oder vom System ermittelte Daten handeln. Die Daten werden hierbei in Form von Datenobjekten abgelegt, das heißt, jedes Datenelement ist einem Datenobjekt zugehörig und kann nur über diesen gelesen, geschrieben und geändert werden. Es hat sich als besonders vorteilhaft erwiesen, jedem Vorgangsbearbeitungsmodul 60 einen eigenen Datencontainer 90 zuzuweisen. Dies hat gegenüber der Verwendung einer allgemeinen Datenbank für alle Vorgangsbearbeitungsmodule 60 den Vorteil, dass verschiedene Zusatzfunktionen durchgeführt werden können. Beispielsweise ist beim Abbruch eines Vorgangsbearbeitungsmoduls 60 ein einfacher Neustart in dem Zustand möglich, in welchem der Abbruch stattfand. Da der Zustand des Vorgangsbearbeitungsmoduls 60 vollständig im Datencontainer abgebildet ist, kann der Zustand beim Neustart rekonstruiert und weitergeführt werden, wobei lediglich ein geringer Datenbestandteil gespeichert und rekonstruiert werden muss.

Welche Datenobjekte im Datencontainer 90 existieren und mit welchen Werten diese gefüllt sind, wird erfindungsgemäß in einer Datencontainer-Konfigurationsdatei 110 angegeben. Diese Datei liegt im Verzeichnis des Vorgangsbearbeitungsmoduls und entspricht einem definierten Schema. Bei der Konfigurationsdatei handelt es sich vorzugsweise um eine Datei im XML-Format. Beim Instanziieren des Datencontainers wird diese Datei geladen, die konfigurierten Datenobjekte werden erstellt und mit den angegebenen Start-Werten initialisiert. Die konfigurierten Datenobjekte stehen dann zur Verfügung und können beispielsweise an ein Steuerelement der graphischen Benutzeroberfläche gebunden und/oder durch die im Business-Objekt BO definierte Programmlogik gelesen, geschrieben und geändert werden. Ist der Datencontainer 90 instanziiert, wird diese Instanz dem Konstruktor des Business Objekts BO übergeben. Dadurch kann das Business-Objekt BO auf die Datenobjekte des Datencontainers zugreifen. Der Datencontainer 90 existiert jedoch prinzipiell unabhängig vom Business-Objekt BO, da dieses erzeugt und wieder vernichtet werden kann.

Zu einem Vorgangsbearbeitungsmodul 60 gehören vorzugsweise mindestens drei Dateien. Bei der ersten Datei handelt es sich um ein Assembly *VGAxxxx.dll* des Vorgangsartenmoduls 60, in welchem die gesamte Vorgangsbearbeitungslogik kodiert sein kann. Das Assembly muss jedoch zumindest die zum Start eines Vorgangsbearbeitungsmoduls 60 notwendigen Klassen implementieren. Bei der zweiten Datei FormFlow.config handelt es sich um die Controller-Konfigurationsdatei 120, welche die Konfiguration für die Operationen und den Ablaufplan des Vorgangsbearbeitungsmoduls 60 beinhaltet. Bei der dritten Datei Datencontainer.config handelt es sich um die Datencontainer-Konfigurationsdatei 110, welche die Konfiguration für die von dem Vorgangsbearbeitungsmodul 60 verwendeten Daten und deren Startwerte enthält.

Die Kommunikation zwischen den Schichten erfolgt in einem bevorzugten Ausführungsbeispiel der Erfindung über Datenobjekte. Vorzugsweise besitzen alle Controls 11 die Eigenschaften *NameAspect* und *ValueAspect*. Die *NameAspect-*Eigenschaft verweist hierbei auf das namensgebende Datenobjekt, während die *ValueAspect*-Eigenschaft auf das wertgebende Datenobjekt verweist. Je nach Control werden ein oder zwei Datenobjekte eingebunden. Wird nur ein Datenobjekt eingebunden, wird automatisch die jeweils andere Eigenschaft auf denselben Eigenschaftswert gesetzt. Ferner können jedoch auch standardmäßige Controls ohne zugeordnete Datenobjekte verwendet werden.

Das Attributieren der Methoden im Business-Objekt BO findet mittels Klassen statt. Das Attributieren der Methoden im Business-Objekt BO ermöglicht die Unabhängigkeit der Namen dieser Methoden von den Namen der Datenobjekte bzw. der Operationen. Eine attributierte Methode kann zu mehreren Datenobjekten oder Operationen aufgerufen werden. Die Konstruktoren der Attribute-Klassen können als Parameter konstante Werte entgegennehmen. Der Presenter ruft bei der Validierung - der Reaktion auf eine Änderung eines Datenobjektes und dem Ausführen einer Operation - jeweils eine zentrale virtuelle Methode am Business-Objekt BO auf.

Eine andere Form der oben genannten Kommunikation findet statt, wenn durch eine Benutzereingabe eine Wertänderung auf der Benutzeroberfläche stattgefunden hat. In diesem Fall muss das durch die Eingabe aktualisierte Control den neuen Wert vorzugsweise nach einer internen Plausibilitätsprüfung an das Business-Objekt BO propagieren. Nach erfolgreicher Validierung auf der Operationen- und dann auf der Funktionseinheits-Ebene wird der neue Wert im betreffenden Datenobjekt des Datencontainers 90 gespeichert.

Bei einer Änderung eines Wertes innerhalb der Funktionseinheit wird das zugeordnete Datenobjekt, das den Wert enthält, über die Datenkomponente an Steuerungselemente weitergeleitet, welche den Wert bearbeiten. Dabei erhält die Funktionseinheit die Kontrolle, was es ihr ermöglicht, Berechnungen, Dateizugriffe, etc. durchzuführen. Insbesondere kann die Funktionseinheit ein laufendes Vorgangsbearbeitungsmodul pausieren und ein neues Vorgangsbearbeitungsmodul starten. Bei einer Änderung eines Wertes leitet das entsprechende Steuerelement den Wert an die Funktionseinheit und den Datencontainer weiter, wobei der Wert zu dem Datenobjekt gespeichert wird, welches dem Steuerelement zugeordnet ist. Die Funktionseinheit manipuliert die Datenobjekte, und das Steuerelement stellt den konkreten aktuellen Inhalt und Zustand des Datenobjektes dar, nachdem die Kontrolle von der Funktionseinheit wieder an den Maskenarbeitsbereich übergegangen ist.

Die Prüfung eingegebener Werte erfolgt vorzugsweise im Bereich des Datencontainers.

Das Vorgangsbearbeitungsmodul 60 kann vorzugsweise auf mehrere Arten gestartet werden. Für den Start des Vorgangsbearbeitungsmoduls 60 ist vorzugsweise ein Startmodul 70 zuständig. Das Startmodul 70 kann auch als Context-Manager bezeichnet werden, der Teil eines ApplicationManagers des Frameworks ist. Der Start wird vorzugsweise durch eine Klasse VGABase unterstützt, welche alle Funktionalitäten zum Starten eines Vorgangsbearbeitungsmoduls 60 beinhaltet. Die Klasse VgaBase stellt eine abstrakte Basisklasse für alle Datencontainer-Klassen dar. Sie implementiert insbesondere die IVGAEntryPoint-Schnittstelle.

Der Application Manager erstellt und initialisiert im Verlauf des Systemstarts alle Objekte, die für den Betrieb von CARBON notwendig sind. Außerdem stellt er den grafischen Anwendungsrahmen in Form eines Hauptfensters mit den jeweiligen Kontrollmechanismen zur Verfügung.

Eine besonders bevorzugte Ausführungsform der Erfindung sieht vor, ein Prozesssystem zum Verarbeiten von Prozessinformationen so auszugestalten, dass das Prozesssystem Vorgangsbearbeitungsmodule (VGA) enthält, wobei die Vorgangsbearbeitungsmodule (VGA) mit einem Context-Manager verbindbar sind, wobei der Context-Manager so ausgebildet ist, dass er mit mindestens einem Vorgangsbearbeitungsmodul (VGA) und mit mehreren Dienstkomponenten verbunden ist.

Der Context-Manager ist das zentrale Steuerungselement und der zentrale Dienstanbieter für die Vorgangsarten. Die Ermittlung der zur Verfügung stehenden Dienste realisiert der Context-Manager durch die Abfrage der angebundenen Komponenten über die Schnittstelle ISupportServices.

Durch die Erfindung werden mehrere vorteilhafte technische Wirkungen erzielt.

Die technischen Wirkungen können sowohl durch einzelne Mittel erzielt werden als auch durch die Kombination mehrerer Mittel, was besonders vorteilhaft ist.

Beispielsweise kann ein erfindungsgemäß ausgestaltetes Prozesssystem schnell und mit geringem Aufwand an neue Vorgänge angepasst werden.

Durch eine Zuordnung einzelner Vorgänge zu einzelnen Vorgangsbearbeitungsmodulen 60 wird die Flexibilität weiter erhöht.

Ferner wird eine gegenseitige Beeinflussung der Bearbeitung verschiedener Vorgänge vermieden.

Insbesondere durch die indirekte Datenübertragung über definierte, gesteuerte Datenübertragungskanäle wird die gegenseitige Beeinflussung weiter verringert.

Ferner ist es vorteilhaft, dass die einzelnen Vorgangsbearbeitungsmodule jeweils für die Ausführung spezifischer Vorgangsarten ausgerüstet sind.

Es ist besonders vorteilhaft, die Vorgangsbearbeitungsmodule 60 so auszugestalten, dass sie voneinander unabhängig unterschiedliche Funktionen wahrnehmen können.

Vorzugsweise ist das erfindungsgemäße System so aufgebaut, dass die Module beliebig ausgetauscht, entfernt oder hinzugefügt werden können.

Die Vorgangsbearbeitungsmodule 60 können durch Plug & Play Installation einfach angeschlossen werden, ohne dass die Gesamtapplikation geändert werden muss. Die Vorgangsbearbeitungsmodule 60 greifen auf unterschiedliche weitere Module des Systems zu.

Durch die Modularstruktur wird eine einfache Integration von neuen Vorgangsarten in das Datenverarbeitungssystem ermöglicht.

Beim Start eines VGA instanziiert und initialisiert das Startmodul 70 den Datencontainer 90 und die Funktionseinheit 80 des betreffenden Vorgangsbearbeitungsmoduls. Ferner wird ein Controller 100 instanziiert, initialisiert und gestartet. Der Controller 100 wird dabei von der Klasse VGABase erzeugt und initialisiert. Der Controller 100 hat die Aufgabe, die Abfolge der verschiedenen VGA-Workspaces 53 eines Ablaufplanes 50 zu steuern. Der Controller 100 sorgt ferner dafür, dass ein Vorgangsbearbeitungsmodul 60 korrekt gestartet und beendet wird und die jeweils richtigen VGA-Workspaces angezeigt werden.

Beim Initialisieren des Datencontainers 90 werden die Datenobjekte angelegt und mit den Start-Werten initialisiert, welche aus einer Datencontainer-Konfigurationsdatei 110 Datencontainer.*config* ausgelesen werden. Die Datencontainer-Konfigurationsdatei 110 enthält die Konfiguration der von dem Vorgangsbearbeitungsmodul 60 verwendeten Daten und deren Startwerte. Beim Initialisieren des Controllers 100 wird ein Ablaufplan des Vorgangsbearbeitungsmoduls 60 erstellt. Dazu liest der Controller 100 die Konfiguration aus einer Controller-Konfigurationsdatei 120 FormFlow.config aus. Dazu kann eine Klasse FormFlowReader verwendet werden, welche den Ablaufplan des Vorgangsbearbeitungsmoduls 60 aus der FormFlow.config ausliest. Die Klasse FormFlowReader wird beim Start eines VGA vom Controller 100 aufgerufen. Die Controller-Konfigurationsdatei 120 beinhaltet neben der Konfiguration des Ablaufplanes auch die Operationen des Vorgangsbearbeitungsmoduls 60.

Die Controller-Konfigurationsdatei 120 liegt vorzugsweise im XML-Format vor und enthält Informationen über den Ablaufplan 50 eines Vorgangsbearbeitungsmoduls 60, sowie über die zu dem jeweiligen Vorgangsbearbeitungsmodul 60 gehörenden Operationen. Die Konfiguration wird gegen ein Schema validiert und bei erfolgreicher Validierung erstellt der Controller 100 den Ablaufplan. Daraufhin erzeugt der Controller 100 eine Datenkomponente 130 und initialisiert diese. Bei jedem Maskenwechsel wird die Datenkomponente vom Controller 100 neu initialisiert. Ferner ermittelt der Controller den ersten VGA-Workspace in dem Ablaufplan 50, initialisiert diesen und zeigt ihn an. Der Controller 100 verwendet für die Maskennavigation einen Stapel, der beim Start eines Vorgangsbearbeitungsmoduls 60 erzeugt wird. Die Maske des ersten VGA-Workspaces wird als erste auf den Stapel gelegt. Falls ein Vorgangsbearbeitungsmodul auf der letzten Maske gestartet werden soll, werden alle Masken auf den Stapel gelegt, so dass die letzte Maske zur obersten Maske auf dem Stapel wird. Der VGA-Workspace 53 initialisiert daraufhin die Steuerelemente 11 auf seiner Oberfläche, wobei er über die Datenkomponente 130 auf die Werte in den zugeordneten Datenobjekten des Datencontainers 90 zugreift.

Bei der Initialisierung geht der VGA-Workspace alle auf seiner Oberfläche angeordneten Controls durch und ermittelt für jedes Control mit Hilfe der Eigenschaft AspectName, welchem Datenobjekt es zugeordnet ist. Anschließend ruft der VGA-Workspace den aktuellen Wert jedes einzelnen Datenobjektes über den Presenter ab. Dies geschieht beispielsweise über eine Methode GetAspect() am Presenter. Hierbei wird der Datenobjektname als Parameter an die Methode GetAspect() übergeben. Daraufhin delegiert der Presenter den Methodenaufruf an das Business-Objekt BO, welches das entsprechende Datenobjekt aus dem Datencontainer abruft.

Damit der Presenter Methoden des Business-Objekts BO aufrufen kann, gibt der Controller 100 die Referenz auf das Business-Objekt BO an den Presenter weiter. Der aktuelle Status des Clients kann in Form eines technischen oder fachlichen Checkpoints weggeschrieben werden. Damit ein Vorgangsbearbeitungsmodul 60 gesichert und wiederhergestellt werden kann, muss sichergestellt sein, dass alle Daten, die innerhalb des VGA von Belang sind, in einem Datenobjekt abgelegt sind. Dadurch ist gewährleistet, dass bei dem Wiederaufsatz auf einem bestimmten Checkpoint die Werte innerhalb der Datenobjekte wiederhergestellt werden. Dies wird durch die Unterstützung von Serialisierung erreicht, das heißt, der Zustand und Inhalt des Datencontainers kann jederzeit in einen binären Datenstrom umgewandelt und persistiert werden. Somit können alle Daten eines VGA, die in einem Datenobjekt und damit im Datencontainer vorhanden sind, im Falle eines Systemabsturzes wiederhergestellt werden.

In Fig. 2 ist eine besonders bevorzugte erfindungsgemäße Zuordnung von verschiedenen Ablaufplänen zu mehreren Vorgangsbearbeitungsmodulen dargestellt. Bei den Vorgangsbearbeitungsmodulen VGA1, VGA2, VGA3 und VGA4 handelt es sich vorzugsweise um Vorgangsbearbeitungsmodule entsprechend der Fig. 1 und der zugehörigen Beschreibung, da diese sich insbesondere zum Einsatz in einem stark modularen Gesamtsystem eignen.

Die Zuordnung eines Ablaufplanes zu einem Vorgangsbearbeitungsmodul erfolgt über die Zuordnung einer Konfigurationsdatei, welche den Ablaufplan enthält, zu dem Vorgangsbearbeitungsmodul. Jedes VGA weist eine eigene Konfigurationsdatei auf, so dass für jedes Vorgangsbearbeitungsmodul ein spezifischer Ablaufplan erstellt und in einer Konfigurationsdatei hinterlegt werden kann. In dem in der Fig. 2 dargestellten Ausführungsbeispiel wird für zwei unterschiedliche Speichermittel jeweils ein Vorgangsbearbeitungsmodul mit einem spezifischen Ablaufplan erzeugt und einem Anwendungsprogramm bereitgestellt.

Die beiden Vorgangsbearbeitungsmodule 61 und 62 weisen die gleiche Funktionseinheit 80 auf, über welche der durch das Modul durchzuführende Vorgang abgebildet ist. Für einen Vorgang liegen somit mehrere Vorgangsbearbeitungsmodule vor, welche sich lediglich durch einen spezifischen Ablaufplan 51 oder 52 unterscheiden. Soll ein neuer Vorgang oder eine Transaktion in das Gesamtsystem aufgenommen werden, werden für den Vorgang so viele Vorgangsbearbeitungsmodule erzeugt, wie im System Speichermittel mit unterschiedlichen Anforderungen möglich sind. Jedes dieser neuen Vorgangsbearbeitungsmodule VGA weist dieselbe Funktionseinheit 80, jedoch unterschiedliche Ablaufpläne auf.

In dem Ausführungsbeispiel der Fig. 2 ist auf einem Computermittel 40 ein Anwendungsprogramm installiert. Das Anwendungsprogramm hat Zugriff auf die verschiedenen Vorgangsbearbeitungsmodule VGA1, VGA2, VGA3, VGA4, etc.

Die Festlegung eines VGA als aktivierbares Vorgangsbearbeitungsmodul kann beispielsweise dadurch erfolgen, dass ein Steuerelement für das betreffende Vorgangsbearbeitungsmodul aktiviert wird.

In einem besonders bevorzugten Ausführungsbeispiel der Erfindung werden beim Start des Anwendungsprogrammes auf dem Computermittel 40 weitere Daten eingelesen und für eine Berechtigungsprüfung verwendet. Beispielsweise können ein Benutzertyp, ein Filialschlüssel, ein Filialtyp oder eine Client-ID eingelesen werden. Der Benutzertyp kann auch hierbei dazu genutzt werden, Benutzern mit unterschiedlichen Berechtigungen verschiedene Vorgangsbearbeitungsmodule zur Verfügung zu stellen. Ein Filialtyp kann beispielsweise genutzt werden, um an einem Filialarbeitsplatz in Abhängigkeit von den Eigenschaften der Filiale unterschiedliche Vorgangsbearbeitungsmodule zu aktivieren. Beispielsweise können in einer Filiale Vorgänge im Bereich der Finanzdienstleistungen angeboten werden, welche in anderen Filialen jedoch nicht verfügbar sein sollen. Da alle Filialen an das gleiche Gesamtsystem angeschlossen sind und die Vorgangsbearbeitungsmodule prinzipiell allen Filialen einheitlich bereitgestellt werden sollen, kann durch ein Einlesen des Filialtyps eine Aktivierung bestimmter VGAs erfolgen, während andere VGAs nicht verfügbar sind. Ändert sich das Berechtigungsprofil einer Filiale, kann dies einfach durch eine Veränderung des Filialtyps und eine entsprechende Zuordnung zu Vorgangsbearbeitungsmodulen realisiert werden.

Für den Start des Anwendungsprogrammes auf dem Client kann im Sinne der vorzugsweise stark modularen Struktur des Gesamtsystems ebenfalls ein eigenständiges vorgangsbearbeitungsmodul bereitgestellt werden. Dieses Anmeldungs-Vorgangsbearbeitungsmodul hat in einem besonders bevorzugten Ausführungsbeispiel der Erfindung die Aufgabe, eine Sessions-Hierarchie aus einer Anwendungs-Session und einer Benutzer-Session anzulegen. Das Vorgangsbearbeitungsmodul füllt diese Session mit von ihr ermittelten Werten. Die Anwendungs-Session wird mit Identifikationsdaten befüllt.

Die Anwendungs-Session kann ferner mit einer ClientID, einem FilialTyp, einem physikalischen Filialschlüssel und einem datenrelevanten Filialschlüssel befüllt werden.

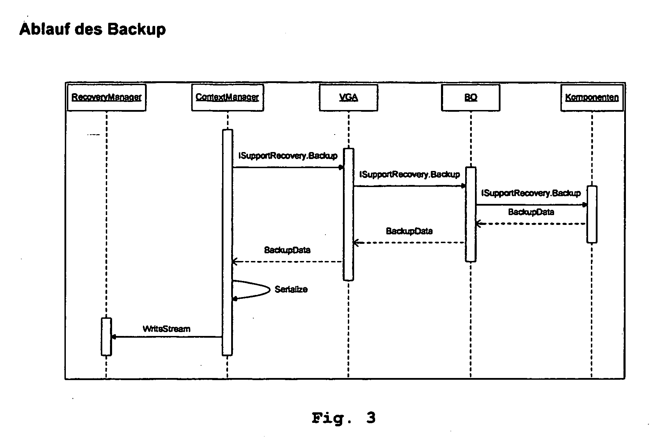

In Fig. 3 ist beispielhaft dargestellt, wie ein Recovery-Manager ein Speichern der Daten durchführt.

Dies geschieht vorzugsweise durch folgende Schritte:
1. Aufruf der statischen Methode Context-Manager.Backup.
2. Iteration über alle Vorgangsbearbeitungsmodule (ISupportRecovery) und Benachrichtigung durch Interfacemethode Backup.
3. Für jedes Vorgangsbearbeitungsmodul entsprechendes Business-Objekt BO aufrufen (ISupportRecovery) und Benachrichtigung durch Interfacemethode Backup.
4. Business-Objekt BO benachrichtigt seine Komponenten (ISupportRecovery) durch InterfaceMethode Backup.
5. Die statische Methode Context-Manager.Backup erzeugt Stream und Serializer, indem sie die Context-Manager-Instanz serialisiert.
6. Eine Serialisierungskomponente durchläuft einen Objektbaum. Vorzugsweise enthält der Objektbaum wenigstens einen Context-Manager, wenigstens einen Session-Manager und wenigstens ein Vorgangsbearbeitungsmodul.
7. Die statische Methode Context-Manager.Backup erzeugt einen Recovery-Manager und übergibt den(die) Stream(s) der Methode Recovery-Manager.Backup.
8. Der Recovery-Manager schreibt den(die) Stream(s) über die CARBON-Komponente DataServices in eine transaktionssichere Datenquelle.

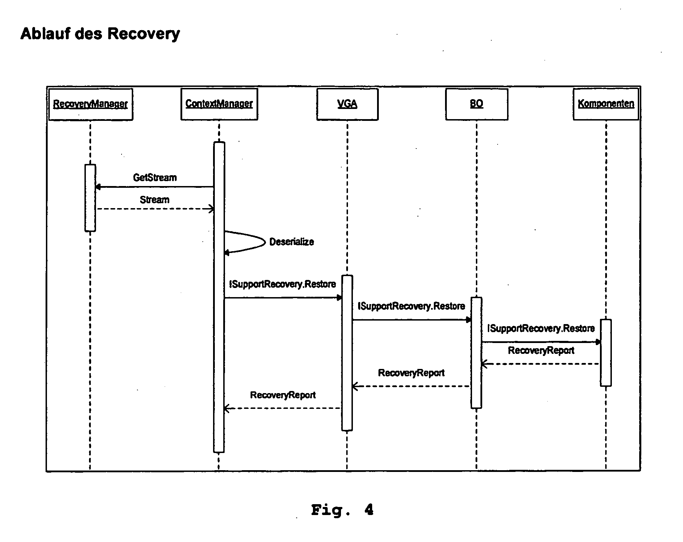

In Fig. 4 ist beispielhaft dargestellt, wie der Recovery-Manager ein Wiederherstellen der Daten steuert.

Dies geschieht vorzugsweise durch eine Abfolge folgender Schritte:
1. Aufruf der statischen Methode Context-Manager.Restore.
2. Die Methode Context-Manager.Restore erzeugt den Recovery-Manager.
3. Der Recovery-Manager prüft, ob ein Recovery-Fall vorliegt, indem in der RecoveryDB nach aktuellen Checkpoints gesucht wird.
4. Im Recovery-Fall wird der letzte Checkpoint (Typ == Recovery) in Form eines Datenstroms durch den Recovery-Manager (Restore) aus der Datenbank DB ausgelesen.
5. Die statische Methode Context-Manager.Restore erzeugt mittels Stream und Seserializer die Instanz des Context-Managers und dessen gesamten Objektbaum.
6. Die Instanzmethode Context-Manager.Start benachrichtigt alle Vorgangsbearbeitungsmodule über den erfolgten Restore über die Schnittstellenmethode ISupportRecovery.Restore.
7. Die Vorgangsbearbeitungsmodule benachrichtigen das Business-Objekt BO und das Business-Objekt BO seine entsprechenden Komponenten über den gleichen Mechanismus.
8. Zum Abschluss werden die zurückgegebenen RecoveryReports im Context-Manager konsolidiert.
9. Im Fehlerfall wird die Anwendung gesperrt, und eine Nachricht über die Nichtbedienbarkeit auf dem Bildschirm angezeigt.

### Fachlicher Wiederaufsatz

Für die Funktionalität des fachlichen Wiederaufsatzes wird die Recovery-Manager-Komponente in gleicher Art verwendet. Auch hier übernimmt der Context-Manager das Handling des Recovery-Managers. Der Aufruf der Methode Context-Manager.Backup erfolgt hier jedoch direkt durch das Business-Objekt BO.

Nachfolgend wird ein besonders bevorzugtes Datenschema für Speicherung (Backup) und Wiederherstellung (Recovery) dargestellt:

```
 CREATE TABLE [dbo].[Recovery] (
     [ID] [int] IDENTITY (1, 1) NOT NULL,
     [Type] [int] NOT NULL,
     [Name] [varchar] (50) COLLATE Latinl_General_CI_AS NULL,
     [Timestamp] [datetime] NOT NULL,
     [Origin] [varchar] (50) COLLATE Latin1_General_CI_AS
     NULL,
     [TopMost] [bit] NULL,
     [SessionLess] [bit] NULL,
     [VgaKey] [varchar] (10) COLLATE Latinl_General_CI_AS
     NULL,
     [SessionData] [image] NULL,
     [VgaData] [image] NULL,
     [ValidThru] [datetime] NULL )
 ON [PRIMARY] TEXTIMAGE_ON [PRIMARY]
```

Auf die Tabelle Recovery wird durch den Recovery-Manager mit Hilfe von Carbon.Data.CommonDataActions.DB.SqlDb.SqlDataAction zugegriffen. Durch Änderung der Konfigurationsdatei für die DataActions kann ohne Codeveränderungen die dem Recovery-Manager zugrunde liegende Datenquelle gewechselt werden.

Nachfolgend werden besonders bevorzugte Schnittstellen zur Implementierung der Erfindung dargestellt:

### IRecovery-Manager

void IRecovery-Manager.Backup(CheckPointType checkPointType,
string checkPointName,
bool topMost,
bool sessionLess,
string vgaKey,
DateTime validThru,
System.IO.Stream vgaDataStream,
System.IO.Stream sessionStream)

Die Methode Backup schreibt die Metadaten und die Nutzdaten eines Checkpoint in die Datenquelle. Als Parameter erwartet sie:
■ checkPointType: Manual oder Desaster. Gibt den Typ des Checkpoints an. Checkpoints vom Typ Manual werden von der Vorgangsart ausgelöst und dienen dem gewollten Unterbrechen der Bearbeitung, um sie zu einem späteren Zeitpunkt wieder aufzunehmen. Checkpoints vom Typ Desaster werden (wenn konfiguriert) vom Context-Manager automatisch angelegt und ermöglichen den Wiederaufsatz nach Systemcrashs.
■ checkPointName: Frei wählbarer Name für den Checkpoint.
■ topMost: Ist dann true, wenn nur die aktuell sichtbare VGA in den vgaDataStream serialisiert wurde.
■ sessionLess: Ist dann true, wenn sessionStream leer ist (NULL) oder nicht in die Datenquelle geschrieben werden soll.
■ VgaKey: VgaKey der Vorgangsart, welche in vgaDataStream serialisiert wurde.
■ validThru: Ab wann ist der Checkpoint zur Löschung freigegeben.
■ vgaDataStream: Der serialisierte Objektgraph der obersten Vorgangsart (topMost == true) bzw. aller Vorgangsarten.
■ sessionStream: Der serialisierte Objektgraph des Session-Manager.

Bei der Validierung ihrer Parameter ergibt die Methode beispielsweise Carbon.Exceptions mit den Nummern C000060 und C000061.

RecoveryReport IRecovery-Manager.Restore(BackupInfo backupInfo) .

Die Methode Restore liest den im Parameter backupInfo angegebenen Checkpoint aus der Datenquelle und legt die Streams in ein Objekt vom Typ RecoveryReport, welches sie zurückgibt. Die Methode Restore erzeugt keine Ausnahmen. Ausnahmen aus aufgerufenen Routinen werden nicht gefangen.

### BackupInfoCollection IRecovery-Manager.QueryBackup

### (CheckPointType checkPointType)

Die Methode QueryBackup liefert die Metadaten aller Checkpoints vom Typ checkPointType in einer Collection von BackupInfo Objekten. Es werden keine Ausnahmen aufgeworfen.
void IRecovery-Manager.DeleteBackup(BackupInfo info)

Die Methode DeleteBackup löscht den mit info identifizierten Checkpoint von der Datenquelle. Es werden keine Ausnahmen erzeugt.

### Erweiterung der Klasse Datencontainer

Zusätzlich zu den Aspekten sollte in dem Datencontainer der Name des aktiven Aspektes persistiert werden. Der Name des aktiven Aspektes wird im Feld activeAspect abgelegt. Beim Serialisieren des Datencontainers wird für den Recovery-Fall der aktive Aspekt persistiert.

Des Weiteren sollte die Klasse Carbon.Vga.Datencontainer um die Eigenschaft ActiveAspect erweitert werden, die das Feld activeAspect setzt bzw. ausliest.

Der Wiederanlauf wird vorzugsweise in folgenden Schritten durchgeführt:
1. Herstellung der Session-Hierarchie mittels IRecovery-Manager.RestoreSession().
2. Start der Wiederanlauf-VGA. Hier wird entschieden, ob der Wiederanlauf fortgeführt wird.
3. Herstellung des VGA-Stacks mittels IRecovery-Manager.RestoreVgaStack() bzw. Beenden des Clients.

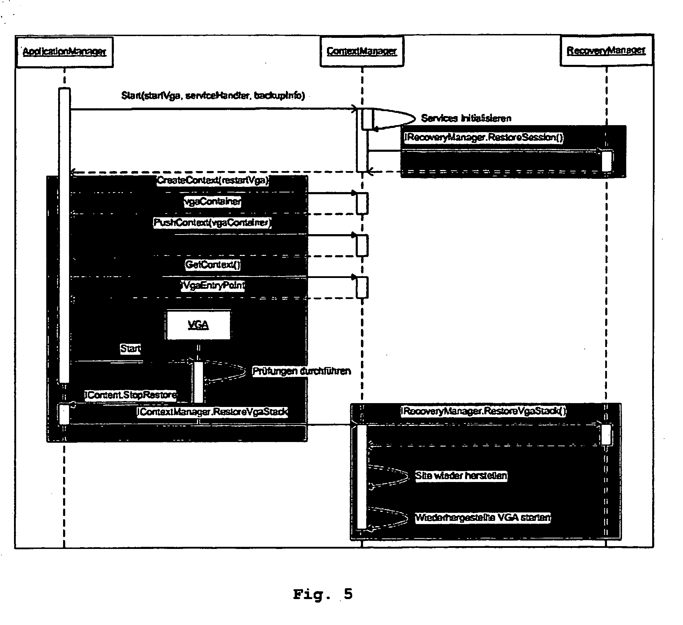

Besonders bevorzugte markierte Bereiche in Fig. 5 stellen die Anpassungen bzw. Erweiterungen im Startprozess dar. Aus dem hier dargestellten Startprozess ergibt sich für diese besonders bevorzugte Ausführungsform folgender Anpassungsbedarf:
■ IContext.Start sollte so verändert werden, dass zunächst nur die Session-Daten wiederhergestellt werden - dies betrifft:
   o Context-Manager.RecoverTechnicalCheckpoint
   o ApplicatioriManager.StartContext-Manager sollte auf das getrennte Wiederherstellen von Session-Daten und VGA-Stack angepasst werden. In dieser Methode sollten nur die Session-Daten wieder hergestellt werden.
■ Folgende Methoden sind besonders vorteilhaft:
   o IContent.StopRestore:
      ■ Wiederherstellen des VGA-Stack aus dem technischen Checkpoint.
      ■ Ende der aktuellen VGA.
   o IContext-Manager.RestoreVgaStack:
      ■ Laden des VGA-Stack.
      ■ Wiederherstellen der Site.
      ■ Starten der VGA.
   o IRecovery-Manager.RestoreSession:
      ■ Laden der Session Daten.
   o IRecovery-Manager.RestoreVgaStack:
      ■ Laden des VGA-Stack

### Backup und Recovery

Der aktuelle Status des Clients kann in Form eines technischen oder fachlichen Checkpoints weggeschrieben werden. Damit eine Vorgangsart gesichert und wiederhergestellt werden kann, muss sichergestellt sein, dass alle Daten, die innerhalb der VGA von Belang sind, in einem Aspekt abgelegt sind.

Dadurch ist gewährleistet, dass bei dem Wiederaufsatz auf einem bestimmten Checkpoint die Werte innerhalb der Aspekte wiederhergestellt werden. Dies wird durch die Unterstützung von Serialisierung erreicht, d.h. der Zustand und Inhalt des Datencontainers kann jederzeit in einen binären Datenstrom umgewandelt und persistiert werden. Somit können alle Daten einer VGA, die in einem Aspekt (und damit im Datencontainer) vorhanden sind, im Falle eines Systemabsturzes wiederhergestellt werden.

### Backup und Recovery

Der aktuelle Status eines Clients kann in Form eines technischen oder fachlichen Checkpoints weggeschrieben werden.

### Recovery-Manager

Der Recovery-Manager ist für das Speichern (Backup) und Zurücksetzen (Recovery) des Anwendungszustandes verantwortlich. Die Vorgangsarten können den Recovery-Manager nutzen um den aktuellen Zustand der Anwendung in einem sog. Checkpoint abzuspeichern. Hierzu wird festgestellt, welche Vorgangsarten aktuell auf dem Stack vorhanden sind, und welche Session-Daten der Session-Manager aktuell verwaltet. Diese Daten werden dann in Form eines Datenstromes in der lokalen CARBON-Datenbank gespeichert und definieren einen technischen Checkpoint. Diese Checkpoints dienen der Wiederherstellung des Systemstatus, wenn der Client nach einem Systemabsturz beendet wird. Diese Checkpoints werden bei ordnungsgemäßer Beendigung des Clients automatisch gelöscht.

Beim Start des Clients wird mit Hilfe des Recovery-Managers festgestellt, ob es in der Datenbank einen Checkpoint gibt (in diesem Fall wurde der Client unkontrolliert beendet), und dieser wird gegebenenfalls wiederhergestellt. Dies bedeutet, dass der Stack der Vorgangsarten und die Inhalte der Sessions gemäß der in dem Checkpoint gespeicherten Informationen zu den Daten hergestellt werden.

### Session-Manager

Der Session-Manager ist die zentrale Komponente für die Verwaltung von Session-Objekten, d.h. er stellt den Vorgangsarten Funktionen zur Manipulation und Zerstörung von Session-Objekten zur Verfügung. Zur Erzeugung von Session-Objekten verwenden die Vorgangsarten das SessionIdCreator-Plugin.
Die Session-Objekte können eine beliebige Anzahl von frei definierbaren Name-Value Paaren aufnehmen. Diese Session-Daten werden zusammen mit einigen Verwaltungsinformationen in einer Datenbank abgelegt. Bei Änderungen der Session-Daten werden diese sofort zurückgeschrieben. Durch dieses Vorgehen können Session-Objekte jederzeit reproduziert werden, auch der Backup/Recovery-Mechanismus wird hierdurch unterstützt. Besonderes Augenmerk wurde auf die statuslose Implementierung des Session-Managers und der Session-Objekte gelegt. Der Session-Manager hält keinerlei Referenzen auf die verwalteten Session-Objekte. Die Zugriffe werden über IDs oder beschreibende Typen realisiert.

### Start des Client

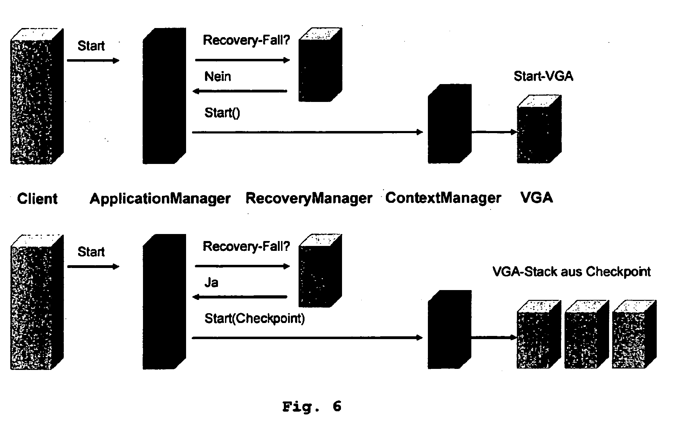

Fig. 6 skizziert die Abläufe beim Start des Clients. Die obere Sequenz gibt den Start ohne vorliegenden technischen Checkpoint (Client wurde normal beendet) wieder. Die untere Sequenz stellt den Ablauf im Recovery-Fall vor, d.h. der Client wurde nicht normal beendet (evtl. Systemabsturz) und wird gemäß des letzten bekannten Status wieder hergestellt.

Die Carbon.Recovery Komponente ist für das Sichern und Wiederherstellen des Frameworks und eines auf ihm basierten Clients zuständig. Über diesen Mechanismus kann, nach dem Schreiben eines Checkpoints, der Zustand wieder hergestellt werden, der z.B. vor einem Systemcrash geherrscht hat. Weiterhin kann eine Vorgangsart das Schreiben eines sog. fachlichen Checkpoints auslösen.

Ein Checkpoint ist eine Art Schnappschuss des Frameworks und eines Clients zu einem bestimmten Zeitpunkt. Dieser Checkpoint wird in der CARBON-Datenbank gespeichert. Ein Checkpoint wird an bestimmten Stellen des Frameworks automatisiert geschrieben oder kann von einem Benutzer gezielt gesetzt werden. Jeder geschriebene Checkpoint verfügt über ein Verfallsdatum, bis zu dem er gültig ist.

Mit Hilfe der in dieser Komponente zur Verfügung gestellten Methoden können nicht nur Checkpoints geschrieben und verwaltet werden, sondern sie werden auch darüber ausgelesen.

### Funktionsweise

### Überblick

Diese Komponente stellt einen Mechanismus bereit, der verschiedene Backup/Recovery-Szenarien durch eine identische Infrastruktur abwickeln kann. Zurzeit werden zwei Arten des Backup/Recovery unterschieden:
- Technisches Backup/Recovery (mit Einsatz der erfindungsgemäßen technischen Checkpoints). Nach einem Systemabsturz kann der Zustand des CARBON-Clients vor dem Absturz wieder hergestellt werden.
- Fachliches Backup/Recovery (mit Einsatz der erfindungsgemäßen fachlichen Checkpoints). Der Status von Vorgängen kann eingefroren werden, um diesen zu einem späteren Zeitpunkt fortzusetzen.

### Klasse Carbon.Recovery.BackupInfo

Die Klasse enthält sämtliche Headerinformationen eines Checkpoints zur weiteren Verarbeitung. Headerinformationen sind zum Beispiel:
- CheckPointName Bezeichnung des Checkpoints
- CheckPointType Typ des Checkpoints (technisch, fachlich)
- ValidThru Gültigkeit des Ceckpoints
- Sessionless Checkpoint enthält SessionDaten oder nicht

### Klasse Carbon.Recovery.BackupInfoCollection

Die Klasse ist eine Collection von BackupInfo-Objekten.

### Klasse Carbon.Recovery.CmpFactory

Die Factory-Klasse, die den Recovery-Manager erzeugt.

### Klasse Carbon.Recovery.QueryBackupParameter

Diese Klasse repräsentiert die Parameter für den Zugriff per QueryBackup-Methode auf die Carbon Datenbank mithilfe des RecoveryDB-DataServices.

### Klasse Carbon.Recovery.RecoveryConstants

Die Klasse enthält sämtliche Konstanten, die in der Komponente verwendet werden.

### Klasse Carbon.Recovery.RecoveryDB

Die Klasse RecoveryDB dient zum Zugriff auf die Carbon Datenbank. Sie ist ein DataService und stellt die gesamte Funktionalität zum Erzeugen, Schreiben, Lesen und Löschen von Recovery-Datensätzen bereit.

### Klasse Carbon.Recovery.Recovery-Manager

Der Recovery-Manager stellt Methoden zum Abfragen, Schreiben und Löschen möglicher Checkpoints aus der oder in die Carbon-Datenbank bereit. Der Recovery-Manager selbst ist eine passive Klasse, er stellt lediglich die Zugriffsmethoden bereit, die eigentlichen Zugriffe werden durch den Context-Manager ausgelöst.

### Klasse Carbon.Recovery.RecoveryReport

Diese Klasse enthält die gesamten Daten eines gespeicherten Checkpoints, sie wird beim Aufruf der Recovery-Manager.Restore-Methode zurückgegeben.

Diese Daten sind:
- BackupInfo Headerinformationen.
- IsSuccess war Lesezugriff erfolgreich?
- Message falls nicht erfolgreich, wird hier die Fehlermeldung zurückgeliefert.
- SessionStream die gesamte serialisierte Session-Hierarchie.
- VgaDataStream sämtliche serialisierte Vorgangsarten mit ihren Aspekt-Daten.

### Klasse Carbon.Recovery.RecoveryTable

Die Klasse ist von DataTable abgeleitet, sie repräsentiert die Recovery-Tabelle der Carbon Datenbank als Objekt.

### Klasse Carbon.Recovery.RestoreParameter

Diese Klasse repräsentiert den ersten Teil der Parameter für den Zugriff per Restore- oder Delete-Methode auf die Carbon Datenbank mittels des RecoveryDB-DataServices.

### Klasse Carbon.Recovery.SelectIdParameter

Diese Klasse repräsentiert den zweiten Teil der Parameter für den Zugriff per Restore- oder Delete-Methode auf die Carbon Datenbank mittels des RecoveryDB-DataServices.

### Schnittstelle Carbon.Recovery.IRecovery-Manager

Dieses Interface definiert die Schnittstelle zur Backup/Recovery-Funktionalität des CARBON#-Frameworks.

### Schnittstelle Carbon.Recovery.ISupportRecovery

Dieses Interface kann optional von einer Vorgangsart implementiert werden. Dadurch wird vor der eigentlichen Serialisierung durch den Context-Manager zuerst die ISupportRecovery.Backup-Methode der Vorgangsart aufgerufen.

### Aufzählung Carbon.Recovery.CheckPointType

### Mögliche Typen von Checkpoints

- Desaster
- Manual

Diese Erweiterung der Erfindung dient dazu, um sowohl bei unbeabsichtigten Unterbrechungen (Desaster) als auch bei beabsichtigten Unterbrechungen (Manual) ein vollständiges und unterbrechungsfreies Wiederaufsetzen der Bearbeitungsvorgänge in den Vorgangsbearbeitungsmodulen zu ermöglichen.

Der Einsatz der Erfindung in einem Filialsystem ist besonders vorteilhaft.

Vorzugsweise werden die in einer Filiale des Filialsystems erfassten Kundenwünsche und Kundendaten zu einer tiefer liegenden Komponente, beispielsweise einer Infrastrukturschicht des Datenverarbeitungssystems, weitergegeben. Die Infrastrukturschicht kümmert sich eigenständig um die Steuerung von peripheren Komponenten, ohne dass der Mitarbeiter in die Abläufe eingreifen müsste. Zum Beispiel werden Druckaufträge automatisch an einen Fahrschein- oder Belegdrucker weitergeleitet oder eine automatische Kasse wird zur Ausgabe eines bestimmten Geldbetrages veranlasst.

Alle diese Vorgänge werden in einem Hintergrundsystem (Backend) protokolliert und Kundendaten werden gespeichert. Darüber hinaus werden in dem Hintergrundsystem, das auch als Filial-Backend bezeichnet wird, Daten gespiegelt und archiviert, um die Grundsätze ordentlicher Buchführung zu verwirklichen. Das Frontend, die Infrastrukturschicht und das Filial-Backend bilden bevorzugte Bestandteile des Filialsystems.

Ein wichtiger Vorteil eines Filialsystems mit erfindungsgemä-ßen Mitteln zur Sicherung und/oder Wiederherstellung von Daten ist, dass mehrere Geschäftsvorgänge parallel betrieben und gesichert beziehungsweise wiederhergestellt werden können.

Ein weiterer Vorteil ist, dass an einem Arbeitsplatz einer Filiale begonnene Bearbeitungsvorgänge ohne Unterbrechung und/oder ohne Datenverlust an einem anderen Arbeitsplatz fortgesetzt werden können.

Bei einer besonders bevorzugten Vernetzung der Filialen über ein Netzwerk ist es sogar möglich, in einer Filiale begonnene Bearbeitungsvorgänge gleichfalls ohne Unterbrechung und/oder ohne Datenverlust in einer anderen Filiale fortzusetzen.

Während ein unterbrechungsfreier Betrieb normalerweise in einem Filialsystem bevorzugt ist, ermöglicht die Erfindung auch gezielte Unterbrechungen von Bearbeitungsvorgängen.

So ist es beispielsweise möglich, eine Kontoeröffnung für einen Kunden erst dann abzuschließen, wenn in einem weiteren Bearbeitungsschritt die Identität des Kunden überprüft wurde.

Die Erfindung erhöht daher sowohl die Flexibilität des Datenverarbeitungssystems, insbesondere des Filialsystems, als auch seine Ausfallsicherheit.

### Bezugszeichenliste:

- 20: Speichermittel
- 30: Benutzer, Anwender
- 40: Computermittel
- 50: Ablaufplan
- 51: Erster Ablaufplan
- 52: Zweiter Ablaufplan
- 53: VGA-Workspace / Maskenarbeitsbereich
- 60: Vorgangsbearbeitungsmodul
- 61: Erstes Vorgangsbearbeitungsmodul
- 62: Zweites Vorgangsbearbeitungsmodul
- 70: Startmodul
- 80: Funktionseinheit
- 90: Datencontainer
- 100: Controller
- 110: Datencontainer-Konfigurationsdatei
- 120: Controller-Konfigurationsdatei
- 130: Datenkomponente

## Patentansprüche

1. Verfahren zur Sicherung und/oder Wiederherstellung einer Datenbank mit wenigstens einem Vorgangsbearbeitungsmodul (60, 61, VGA, VGA1, VGA2, VGA3, VGA4)
**dadurch gekennzeichnet,**
**dass** das Vorgangsbearbeitungsmodul (60, 61, VGA, VGA1, VGA2, VGA3, VGA4) **dadurch** gesichert und/oder wiederhergestellt wird, dass für die Ausführung des Vorgangsbearbeitungsmoduls (60, 61 VGA, VGA1, VGA2, VGA3, VGA4) erforderliche Daten in einem Datenobjekt abgelegt werden und dass ein Context-Manager (CM) eine Serialisierungskomponente aufruft, dass auf Grundlage der in dem Datenobjekt abgelegten Daten ein Datenstrom (Stream) erzeugt wird, dass ein Recovery-Manager den Datenstrom zusammen mit einem die in dem Datenobjekt abgelegten verifizierenden fachlichen Checkpoint Typs Recovery in einem Sicherungsmedium speichert und dass anhand des mit dem Datenstrom mitgespeicherten fachlichen Checkpoints des Typs Recovery der Datenstrom aus dem Sicherungsmedium ausgelesen wird.

2. Verfahren nach Anspruch 1
**dadurch gekennzeichnet,**
**dass** ein Speichern von Daten so erfolgt, dass Zustand und Inhalt eines Datencontainers (90) in einen binären Datenstrom umgewandelt werden.

3. Verfahren nach einem der Ansprüche 1 oder 2,
**dadurch gekennzeichnet,**
**dass** in dem Vorgangsbearbeitungsmodul (60, 61, VGA, VGA1, VGA2, VGA3, VGA4) ein Datencontainer (90) zum Speichern des Datenobjekts erzeugt wird.

4. Verfahren nach einem der Ansprüche 1 bis 3,
**dadurch gekennzeichnet,**
**dass** die Datenobjekte den Wert der Daten enthalten.

5. Verfahren nach einem der Ansprüche 1 bis 4,
**dadurch gekennzeichnet,**
**dass** jedem Datenelement, das von dem Vorgangsbearbeitungsmodul (60, 61, VGA, VGA1, VGA2, VGA3, VGA4) erfasst und/oder verarbeitet wird, ein Datenobjekt zugeordnet wird.

6. Verfahren nach einem der Ansprüche 1 bis 5,
**dadurch gekennzeichnet,**
**dass** der Datencontainer (90) den gesamten Zustand eines Vorgangs enthält.

7. Verfahren nach einem der Ansprüche 1 bis 6,
**dadurch gekennzeichnet,**
**dass** die Datenobjekte Eigenschaften der Daten enthalten.

8. Verfahren nach Anspruch 7,
**dadurch gekennzeichnet,**
**dass** die Eigenschaften der Daten Beschränkungen zugelassener Werte beschreiben.

9. Verfahren nach einem der vorangegangenen Ansprüche,
**dadurch gekennzeichnet,**
**dass** das Verfahren in einem Netzwerk erfolgt, das mehrere Vorgangsbearbeitungsmodule (60, 61, VGA, VGA1, VGA2, VGA3, VGA4) enthält, wobei die Vorgangsbearbeitungsmodule (60, 61, VGA, VGA1, VGA2, VGA3, VGA4) mit einem Context-Manager verbindbar sind, wobei der Context-Manager so ausgebildet ist, dass er mit mindestens einem Vorgangsbearbeitungsmodulen (60, 61, VGA, VGA1, VGA2, VGA3, VGA4) und mit mehreren Dienstkomponenten verbunden ist.

10. Verfahren nach Anspruch 9,
**dadurch gekennzeichnet,**
**dass** der Context-Manager sowohl als zentrales Steuerungsmittel für die Vorgangsbearbeitungsmodule (60, 61, VGAVGA1, VGA2, VGA3, VGA4) als auch als zentraler Dienstanbieter für die Vorgangsbearbeitungsmodule (60, 61, VGA, VGA1, VGA2, VGA3, VGA4) ausgebildet ist.

11. Verfahren nach Anspruch 9 oder 10,
**dadurch gekennzeichnet,**
**dass** der Context-Manager mit einer Schnittstelle ISupportService (ISS) verbunden ist, und dass die Schnittstelle so ausgebildet ist, dass sie eine Abfrage des Vorhandenseins von angebundenen Dienstkomponenten ermöglicht.

12. Verfahren nach einem der vorangegangenen Ansprüche,
**dadurch gekennzeichnet,**
**dass** eine Datenübermittlung durch eine Benachrichtigungskomponente (KISS) erfolgt.

13. Verfahren nach Anspruch 12,
**dadurch gekennzeichnet,**
**dass** die Benachrichtigungskomponente ein Auswahlmodul zur Auswahl von Übertragungswegen zum Übermitteln der Benachrichtigungen enthält.

14. Verfahren nach einem der vorangegangenen Ansprüche,
**dadurch gekennzeichnet,**
**dass** ein Ablaufplan (50) des Vorgangsbearbeitungsmoduls (60, 61, VGA, VGA1, VGA2, VGA3, VGA4) in einer Konfigurationsdatei (120) hinterlegt wird, welche beim Start des Vorgangsbearbeitungsmoduls (60, 61, VGA, VGA1, VGA2, VGA3, VGA4) eingelesen wird.

15. Verfahren nach einem der vorangegangenen Ansprüche,
**dadurch gekennzeichnet,**
**dass** eine Controller-Konfigurationsdatei (120) und/oder eine Datencontainer-Konfigurationsdatei (110) im XML-Format bereitgestellt werden.

16. Filialsystem,
**dadurch gekennzeichnet,**
**dass** es Mittel zur Durchführung des Verfahrens nach einem der Ansprüche 1 bis 15 enthält.

## Claims

1. A method for backing up and/or recovering a database with at least one transaction processing module (60, 61, VGA, VGA1, VGA2, VGA3, VGA4)
**characterized in that**
the transaction processing module (60, 61, VGA, VGA1, VGA2, VGA3, VGA4) is backed up and/or recovered **in that** data needed for the execution of the transaction processing module is stored in a data object and **in that** a context manager (CM) calls a serialization component, **in that** a data stream is generated on the basis of the data stored in the data object, **in that** a recovery manager stores the data stream in a backup medium together with a procedural checkpoint of the recovery type that verifies the data stored in the data object, and **in that** the data stream is read out of the backup medium on the basis of the procedural checkpoint of the recovery type that is stored along with the data stream.

2. The method according to Claim 1,
**characterized in that**
data is stored in such a way that the state and content of a data container (90) are converted into a binary data stream.

3. The method according to one of Claims 1 or 2,
**characterized in that**
a data container (90) for storing the data object is generated in the transaction processing module (60, 61, VGA, VGA1, VGA2, VGA3, VGA4).

4. The method according to one of Claims 1 to 3,
**characterized in that**
the data objects contain the value of the data.

5. The method according to one of Claims 1 to 4,
**characterized in that**
each data element that is acquired and/or processed by the transaction processing module (60, 61, VGA, VGA1, VGA2, VGA3, VGA4) is associated with a data object.

6. The method according to one of Claims 1 to 5,
**characterized in that**
the data container (90) contains the entire state of a transaction.

7. The method according to one of Claims 1 to 6,
**characterized in that**
the data objects contain properties of the data.

8. The method according to Claim 7,
**characterized in that**
the properties of the data describe limitations of permissible values.

9. The method according to one of the preceding claims,
**characterized in that**
the method takes place in a network comprising several transaction processing modules (60, 61, VGA, VGA1, VGA2, VGA3, VGA4), whereby the transaction processing modules (60, 61, VGA, VGA1, VGA2, VGA3, VGA4) can be connected to a context manager, and whereby the context manager is configured in such a way that it is connected to at least one transaction processing module (60, 61, VGA, VGA1, VGA2, VGA3, VGA4) as well as to several service components.

10. The method according to Claim 9,
**characterized in that**
the context manager is configured as a central control means for the transaction processing modules (60, 61, VGA, VGA1, VGA2, VGA3, VGA4) and also as a central service provider for the transaction processing modules (60, 61, VGA, VGA1, VGA2, VGA3, VGA4).

11. The method according to Claim 9 or 10,
**characterized in that**
the context manager is connected to an ISupportService (ISS) interface, and **in that** the interface is configured in such a way that it allows a query as to the presence of connected service components.

12. The method according to one of the preceding claims,
**characterized in that**
a data transmission is carried out by a notification component (KISS).

13. The method according to Claim 12,
**characterized in that**
the notification component contains a selection module for selecting transmission routes for transmitting the notifications.

14. The method according to one of the preceding claims,
**characterized in that**
a sequence plan (50) of the transaction processing module (60, 61, VGA, VGA1, VGA2, VGA3, VGA4) is stored in a configuration file (120) that is read in when a transaction processing module (60, 61, VGA, VGA1, VGA2, VGA3, VGA4) is started.

15. The method according to one of the preceding claims,
**characterized in that**
a controller configuration file (120) and/or a data container configuration file (110) are provided in XML format.

16. A branch system,
**characterized in that**
it comprises means for carrying out the method according to one of Claims 1 to 15.

## Revendications

1. Procédé pour sécuriser et/ou récupérer une base de données avec au moins un module de traitement d'opérations (60, 61, VGA, VGA1, VGA2, VGA3, VGA4), **caractérisé en ce que** le module de traitement d'opérations (60, 61, VGA, VGA1, VGA2, VGA3, VGA4) est sécurisé et/ou récupéré par dépôt, dans un objet de données, de données requises pour l'exécution du module de traitement d'opérations (60, 61, VGA, VGA1, VGA2, VGA3, VGA4) et par appel d'un composant de sérialisation par un gestionnaire de contexte (CM), **en ce qu'**un flux de données (Stream) est généré sur la base des données déposées dans l'objet de données, **en ce qu'**un gestionnaire de récupération met en mémoire sur un support de sécurisation le flux de données conjointement avec un point de contrôle spécialisé du type Recovery qui vérifie les données déposées dans l'objet de données et **en ce que** le flux de données est extrait du support de sécurisation à l'aide du point de contrôle spécialisé du type Recovery mis en mémoire avec le flux de données.

2. Procédé selon la revendication 1, **caractérisé en ce qu'**une mise en mémoire de données se produit de manière telle que l'état et le contenu d'un conteneur de données (90) sont convertis en un flux de données binaires.

3. Procédé selon l'une des revendications 1 ou 2, **caractérisé en ce qu'**un conteneur de données (90) est créé dans le module de traitement d'opérations (60, 61, VGA, VGA1, VGA2, VGA3, VGA4) pour mettre l'objet de données en mémoire.

4. Procédé selon l'une des revendications 1 à 3, **caractérisé en ce que** les objets de données contiennent la valeur des données.

5. Procédé selon l'une des revendications 1 à 4, **caractérisé en ce qu'**un objet de données est affecté à chaque élément de données qui est saisi et/ou traité par le module de traitement d'opérations (60, 61, VGA, VGA1, VGA2, VGA3, VGA4).

6. Procédé selon l'une des revendications 1 à 5, **caractérisé en ce que** le conteneur de données (90) contient tout l'état d'une opération.

7. Procédé selon l'une des revendications 1 à 6, **caractérisé en ce que** les objets de données contiennent des caractéristiques des données.

8. Procédé selon la revendication 7, **caractérisé en ce que** les caractéristiques des données décrivent des limitations des valeurs autorisées.

9. Procédé selon l'une des revendications précédentes, **caractérisé en ce que** le procédé a lieu dans un réseau qui contient plusieurs modules de traitement d'opérations (60, 61, VGA, VGA1, VGA2, VGA3, VGA4), les modules de traitement d'opérations (60, 61, VGA, VGA1, VGA2, VGA3, VGA4) pouvant être reliés à un gestionnaire de contexte, le gestionnaire de contexte étant réalisé de manière telle qu'il est relié à au moins un module de traitement d'opérations (60, 61, VGA, VGA1, VGA2, VGA3, VGA4) et à plusieurs composants de services.

10. Procédé selon la revendication 9, **caractérisé en ce que** le gestionnaire de contexte est réalisé non seulement en tant que moyen de commande central pour les modules de traitement d'opérations (60, 61, VGA, VGA1, VGA2, VGA3, VGA4), mais aussi en tant que fournisseur de services central pour les modules de traitement d'opérations (60, 61, VGA, VGA1, VGA2, VGA3, VGA4).

11. Procédé selon la revendication 9 ou 10, **caractérisé en ce que** le gestionnaire de contexte est relié à une interface ISupportService (ISS) et **en ce que** l'interface est réalisée de manière telle qu'elle permet une interrogation de la présence de composants de services rattachés.

12. Procédé selon l'une des revendications précédentes, **caractérisé en ce qu'**une transmission de données se fait par un composant de notification (KISS).

13. Procédé selon la revendication 12, **caractérisé en ce que** le composant de notification contient un module de sélection pour sélectionner des voies de transmission pour transmettre les notifications.

14. Procédé selon l'une des revendications précédentes, **caractérisé en ce qu'**un plan du déroulement (50) du module de traitement d'opérations (60, 61, VGA, VGA1, VGA2, VGA3, VGA4) est déposé dans un fichier de configuration (120) qui est lu au lancement du module de traitement d'opérations (60, 61, VGA, VGA1, VGA2, VGA3, VGA4).

15. Procédé selon l'une des revendications précédentes, **caractérisé en ce qu'**un fichier de configuration de contrôleur (120) et/ou un fichier de configuration de conteneur de données (110) sont mis à disposition au format XML.

16. Système de filiales, **caractérisé en ce qu'**il contient des moyens permettant d'exécuter le procédé selon l'une des revendications 1 à 15.
